# EUROPÄISCHE PATENTSCHRIFT

(11) **EP 1 835 251 B1**
(45) Veröffentlichungstag und Bekanntmachung des Hinweises auf die Patenterteilung: **28.12.2011**
(21) Anmeldenummer: 07003615.7
(22) Anmeldetag: 22.02.2007
(51) Int. Cl.: F28D 1/03, F28F 3/02, H01M 8/04, H01M 10/50

(54) **Vorrichtung zur Kühlung elektrischer Elemente**
Device for cooling electrical elements
Dispositif destiné au refroidissement d'éléments électriques

(30) Priorität: 22.02.2006 DE 102006008579; 15.05.2006 DE 102006022916
(43) Veröffentlichungstag der Anmeldung: 19.09.2007
(73) Patentinhaber: Behr GmbH & Co. KG, 70469 Stuttgart (DE)
(72) Erfinder: Damsohn, Herbert, Dr.-Ing., 73773 Aichwald (DE); Heckenberger, Thomas, Dr.-Ing., 70771 Leinfelden-Echterdingen (DE); Isermeyer, Tobias, 70736 Fellbach (DE); Luz, Klaus, Dipl.-Ing., 71083 Herrenberg (DE); Pfender, Conrad, Dr.-Ing., 74354 Besigheim (DE)
(74) Vertreter: Grauel, Andreas

(56) Entgegenhaltungen:
- EP-A- 1 202 359
- EP-A- 1 271 085
- EP-A1- 0 177 225
- US-A- 4 233 369
- US-A- 5 676 911

## Beschreibung

Die Erfindung betrifft eine Vorrichtung zur Kühlung elektrischer Elemente insbesondere eines Kraftfahrzeugs nach dem Oberbegriff des Anspruchs 1.

Insbesondere bei modernen Kraftfahrzeugen werden Komponenten eingesetzt, die eine Vielzahl elektrischer Elemente umfassen, wobei hohe umgesetzte Leistung eine Kühlung der elektrischen Elemente erforderlich macht. Beispiele für den Einsatz solcher Elemente sind Hybrid-Fahrzeuge, Elektrofahrzeuge, Brennstoffzellenfahrzeuge und allgemein Fahrzeuge, bei denen zumindest ein elektrischer Hilfsantrieb vorliegt.

EP-A-0 177 225 beschreibt eine Anordnung zur Kühlung einer Vielzahl von Batterien mittels eines flüssigen Kühlmittels, wobei die Batterien zwischen Paaren von länglichen, von Kühlmittel durchströmten Kühlwangen in Reihen nebeneinander gehalten sind. Eine solche Vorrichtung ist aufwendig und kostenintensiv in der Herstellung, wobei eine nur geringe Packungsdichte der Batterien erzielbar ist. Zudem ist ein guter thermischer Kontakt bei zugleich guter elektrischer Isolierung schwierig herstellbar und empfindlich gegen temperaturbedingte Materialausdehnungen.

Es ist die Aufgabe der Erfindung, eine Vorrichtung zur Kühlung elektrischer Elemente insbesondere eines Kraftfahrzeugs anzugeben, die bei hoher Betriebssicherheit eine gute Kühlung gewährleistet und eine hohe Packungsdichte der elektrischen Elemente ermöglicht.

Diese Aufgabe wird für eine eingangs genannte Vorrichtung erfindungsgemäß mit den kennzeichnenden Merkmalen des Anspruchs 1 gelöst. Durch die stoffschlüssige Verbindung zwischen den Leitkörpern und den Seitenflächen der elektrischen Elemente beziehungsweise zwischen den Leitkörpern und dem Kühlkörper werden Lufteinschlüsse vermieden beziehungsweise überbrückt, so dass die elektrischen Elemente gut über deren Seitenflächen kühlbar sind. Dies ist insbesondere dann besonders vorteilhaft, wenn die Bodenflächen der elektrischen Elemente aufgrund von Sollbruchstellen frei bleiben müssen und deshalb nicht ausreichend für eine Kühlung kontaktiert werden können.

Durch eine Anordnung des vom Kühlmittel durchströmten Kühlkörpers parallel zu den ausgerichteten Bodenflächen der Elemente wird eine hohe Packungsdichte der Elemente erreicht, wobei zugleich durch die Leitkörper eine insgesamt ausreichende Kühlleistung auch im Bereich der Seitenwände bereitgestellt wird.

Allgemein bevorzugt ist der Kühlkörper als Plattenelement ausgebildet, wobei das Kühlmittel den Kühlkörper in seiner Erstreckungsebene durchströmt. Vorteilhaft ist dabei der Kühlkörper aus zwei Plattenhälften zusammengesetzt, insbesondere mittels flächiger Verlötung oder Klebung. Hierdurch wird insgesamt eine einfache und kostengünstige Herstellung des Kühlkörpers bei zugleich effektiver Anordnung der Strömungskanäle des Kühlmittels ermöglicht.

Vorteilhaft sind die Leitkörper an dem Kühlkörper angeordnet und erstrecken sich im westlichen senkrecht zu der Ebene des Kühlkörpers. Somit ist ein guter thermischer Kontakt mit den Seitenflächen der elektrischen Elemente und zugleich mit dem Kühlkörper gegeben.

In einer bevorzugten Ausführungsform sind die Leitkörper Hohlzylinder, in denen jeweils ein elektrisches Element aufgenommen ist. Zur Sicherstellung einer ausreichenden Wärmeableitung weisen die Hohlzylinder dabei eine Wandstärke von etwa 0,8 mm bis etwa 5 mm auf. In einer weiterhin vorteilhaften, Gewicht und Herstellungskosten verringernden Weiterbildung erstrecken sich die Hohlzylinder nur über einen Teil einer Höhe der Seitenwände der elektrischen Elemente.

Bei einer alternativen oder ergänzenden Ausführungsform sind die Leitkörper als Stäbe ausgebildet, die zwischen den Seitenflächen benachbarter elektrischer Elemente angeordnet sind. Hierdurch lässt sich die Wärme der Seitenflächen der Elemente längs der Stäbe aufnehmen, wobei die metallischen Stäbe mit ihrer guten Wärmeleitfähigkeit die Wärme effektiv zu dem Kühlkörper transportieren. In zweckmäßiger Ausgestaltung weisen die Stäbe einen im Wesentlichen kreisförmigen Querschnitt auf, wodurch sie einfach und kostengünstig herstellbar sind. Alternativ können die Stäbe auch einen im Wesentlichen dreieckigen Querschnitt oder einen anderen geeigneten Querschnitt aufweisen, wodurch die Herstellung zwar aufwendiger, der thermische Kontakt mit den Seitenflächen aufgrund geeigneter Anpassung der Geometrien jedoch gegebenenfalls vergrößert ist.

Bevorzugt verbleiben zwischen Leitkörpern und den Seitenflächen der elektrischen Elemente Zwischenräume, die mittels elektrisch isolierender Vergussmasse aufgefüllt sind. Hierdurch wird eine gute elektrische Isolation mit einer guten Wärmeableitung durch die Vergussmasse kombiniert. Aus Gründen der Haltbarkeit ist die Vergussmasse dabei bevorzugt ein Polymer auf Polyurethanbasis. Allgemein bevorzugt ist die Vergussmasse mit einem Zuschlagstoff zur Erhöhung ihrer thermischen Leitfähigkeit versetzt. Zur Sicherstellung einer hohen elektrischen Durchschlagfestigkeit ist der Zuschlagstoff elektrisch isolierend. Insbesondere vorteilhaft kann es sich wegen gleichzeitiger guter elektrischer Isolation und thermischer Leitfähigkeit um keramische Partikel handeln.

In allgemein bevorzugter Ausführung weist der Kühlkörper zwei gegenüberliegende Seiten auf, wobei auf jeder der Seiten Leitkörper angeordnet sind, die sich zu der jeweiligen Seite im Wesentlichen senkrecht erstrecken. Durch diese insbesondere zu einer Halbierenden des Kühlkörpers symmetrische Bauweise kann eine gute Bauraumdichte bei optimaler Ausnutzung der Leistung des Kühlkörpers erzielt werden.

Vorteilhaft ist allgemein zwischen den elektrischen Elementen und den Leitkörpern eine elektrisch isolierende Beschichtung vorgesehen. Regelmäßig sind die elektrischen Elemente mit Ihren Außenhüllen nicht auf Massepotential und weisen auch untereinander verschiedene Potentiale auf, insbesondere bei Serienschaltung. Eine solche Beschichtung stellt eine ausreichende Durchschlagfestigkeit sicher. Zur gleichzeitigen Optimierung der thermischen Leitfähigkeit und zur Verhinderung besonders heißer lokaler Bereiche der elektrischen Elemente ist die Beschichtung stoffschlüssig und weist insbesondere keine flächigen Lufteinschlüsse auf. Die Beschichtung kann bevorzugt eine Isolierlackschicht, insbesondere eine Pulverbeschichtung umfassen. Alternativ oder ergänzend kann die Beschichtung eine Klebstoffschicht umfassen. Weiterhin alternativ oder ergänzend kann die Beschichtung eine Schicht aus Glimmerpapier umfassen. eine bevorzugte mehrschichtige Isolierschicht kann zum Beispiel in der Kombination Isolierlack-Klebstoff-Glimmerpapier-Klebstoff-Isolierlack bestehen, wobei der Isolierlack der einen Seite auf dem elektrischen Element angebracht ist und auf der anderen Seite auf einem Leitkörper.

Allgemein vorteilhaft sind zumindest einige der elektrischen Elemente elektrochemische Akkumulatoren, insbesondere Lithium-lonen-Batterien. Diese Elemente haben eine hohe Leistungsdichte und ergeben entsprechende thermische Probleme. Alternativ oder ergänzend können zumindest einige der elektrischen Elemente Kondensatoren sein. Auch moderne Kondensatoren, worunter auch sogenanne "Superkaps" zu verstehen sind, können sehr hohe Leistungsdichten bereitstellen und erfahren eine entsprechende innere Erwärmung.

Besonders vorteilhaft weisen die elektrischen Elemente eine im Wesentlichen zylindrische Form auf, wobei die Bodenfläche eine stirnseitige Fläche des Zylinders ist. Dies ist eine übliche Bauform, die zudem eine gute Verteilung der im Element entstehenden Wärme sicherstellt. Die nicht einfache Ableitung der Wärme von den zylindrischen Wänden bedingt eine besonders gute Kombinierbarkeit der Elementenform mit der vorliegenden Erfindung.

Bevorzugt weisen die elektrischen Elemente eine metallene Aussenwandung auf, die auf einem elektrischen Potential des Elements liegt. Hierdurch lässt sich die Wärme des Elements gut nach Außen abgeben, wobei allerdings die Notwendigkeit einer elektrischen Isolierung gegenüber einer Kühlvorrichtung verbleibt.

Zur Verbesserung der Betriebssicherheit weist der Kühlkörper eine Ausnehmung auf, die zumindest teilweise von der Bodenfläche eines elektrischen Elements überdeckt wird, wobei das elektrische Element im Bereich der Überdeckung eine Sollbruchstelle in der Bodenfläche aufweist und wobei ein aufgebrochener Boden in die Ausnehmung ausweicht. Allgemein bevorzugt ist eine Leitung des Elements im Bereich der Sollbruchstelle mit dem Boden verbunden, so dass bei Brechen des Bodens eine Stromunterbrechung erfolgt. Dies kann dann besonders zuverlässig erfolgen, wenn der Kühlkörper über eine entsprechende Ausnehmung verfügt.

Zum Zweck der einfachen Montage und Sicherstellung einer Isolation zwischen elektrischem Element und Kühlkörper ist vorteilhaft zwischen dem Kühlkörper und einem der elektrischen Elemente ein Abstandsstück aus einem elektrisch isolierenden Material angeordnet ist.

In besonders bevorzugter Ausführung ist das Kühlmittel ein Kältemittel einer Klimaanlage. Hierdurch lassen sich besonders im Fall eines Kraftfahrzeugs vorhandene Kühleinrichtungen auf einfache Weise nutzen, um den Kühlkörper zu kühlen. Besonders vorteilhaft ist dabei der Kühlkörper als ein Verdampfer der Klimaanlage ausgebildet, wodurch eine sehr gute Kühlung des Kühlkörpers erreicht wird. Der Kühlkörper kann dabei insbesondere einer von mehreren Verdampfern eines Fahrzeug-Kältekreises sein.

Zur Ermöglichung hoher Gesamtspannungen der elektrischen Elemente und hierdurch hoher Leistungen, wie sie insbesondere im Antriebsbereich verlangt werden, ist der Kühlkörper gegenüber zumindest einigen der elektrischen Elemente elektrisch isoliert, wobei die Isolation insbesondere gegenüber Spannungen von wenigstens etwa 1000 Volt durchbruchsfest ist.

Allgemein bevorzugt bestehen Kühlkörper und/oder Leitkörper im Wesentlichen aus Aluminium oder einer Aluminiumlegierung. Hierdurch ist bei guter Wärmeleitung des Materials eine besonders einfache und kostengünstige Herstellung ermöglicht, da Aluminiumteile leicht und zuverlässig flächig verlötbar sind. Zugleich wird das Gewicht der Vorrichtung bezogen auf die Wärmeleitfähigkeit gering gehalten.

In besonders bevorzugter Ausführungsform sind die elektrischen Elemente von einer insbesondere aus Metall bestehenden Wandung umgeben. Hierdurch ist ein verbesserter Schutz der Vorrichtung gegen Erschütterung gegeben. Vorteilhaft steht dabei die Wandung mit dem Kühlkörper in thermischem Kontakt und ist insbesondere unmittelbar mit dem Kühlkörper verbunden, wodurch auch die Wandung einen weiteren Beitrag zur Ableitung der Wärme von den elektrischen Elementen beisteuern kann. Alternativ oder ergänzend steht die Wandung mit zumindest einem der Leitkörper in thermischem Kontakt steht und ist insbesondere unmittelbar mit dem Leitkörper verbunden, wodurch die Wärmeableitung weiter optimiert ist.

Im Sinne einer kostengünstigen Herstellung besteht die Wandung aus zumindest einem Blechteil. Alternativ kann sie auch als Gußteil ausgeformt sein. Zur sicheren Festlegung der Wandung grenzen bevorzugt zwei Kanten der Wandung in einem Bereich einer Überlappung mit einem der Leitkörper aneinander an. Somit kann der betreffende Leitkörper zum Beispiel durch flächige Verlötung oder Verklebung mit den Kantenbereichen der Wandung zugleich als Halterung für die Wandung dienen.

Allgemein vorteilhaft ist die Wandung mit zumindest einem aus der Gruppe Kühlkörper und einer der Leitkörper verlötet, wodurch eine kostengünstige Herstellung bei hoher mechanischer Festigkeit erreicht wird. Besonders vorteilhaft bestehen dabei die Wandung, die Leitkörper und der Kühlkörper jeweils aus einer zumindest teilweise lotplattierten Aluminiumlegierung. Hierdurch ist es weiterhin ermöglicht, dass vorteilhaft die Wandung, die Leitkörper und der Kühlkörper im Zuge einer Herstellung der Vorrichtung als vormontierte Baugruppe insgesamt erhitzt wird, um die Teile miteinander zu verlöten.

Bevorzugt ist durch die Wandung ein Vergussrahmen zum stoffschlüssigen Vergießen von Zwischenräumen zwischen den elektrischen Elemente mit einer elektrisch isolierenden Vergussmasse ausgebildet, so dass die Wandung bereits im Zuge der Herstellung der Vorrichtung eine vorteilhafte Funktion übernimmt.

Weitere Vorteile und Merkmale der Erfindung ergeben sich aus den nachfolgend beschriebenen Ausführungsbeispielen sowie aus den abhängigen Ansprüchen.

Nachfolgend werden zwei bevorzugte Ausführungsbeispiele einer erfindungsgemäßen Vorrichtung beschrieben und anhand der anliegenden Zeichnungen näher erläutert.
- Fig. 1: zeigt eine schematische ausschnittsweise Schnittdarstellung eines ersten Ausführungsbeispiels der Erfindung.
- Fig. 2: zeigt eine erste Abwandlung des Ausführungsbeispiels aus Fig. 1.
- Fig. 3: zeigt eine schematische Draufsicht auf das Ausführungsbeispiel aus Fig. 2.
- Fig. 4: zeigt eine Detaildarstellung einer Isolierschicht der Beispiele aus Fig. 1 und Fig. 2
- Fig. 5: zeigt eine ausschnittsweise Querschnittdarstellung einer Vorrichtung zur Kühlung elektrischer Elemente.
- Fig. 6: zeigt eine ausschnittsweise Querschnittdarstellung einer Abwandlung des Ausführungsbeispiels aus Fig. 5.
- Fig. 7: zeigt eine Schnittdarstellung durch einen Teil des zweiten Ausführungsbeispiels nach Fig. 2.
- Fig. 8: zeigt eine schematische Draufsicht auf ein weiteres Ausführungsbeispiel der Erfindung.

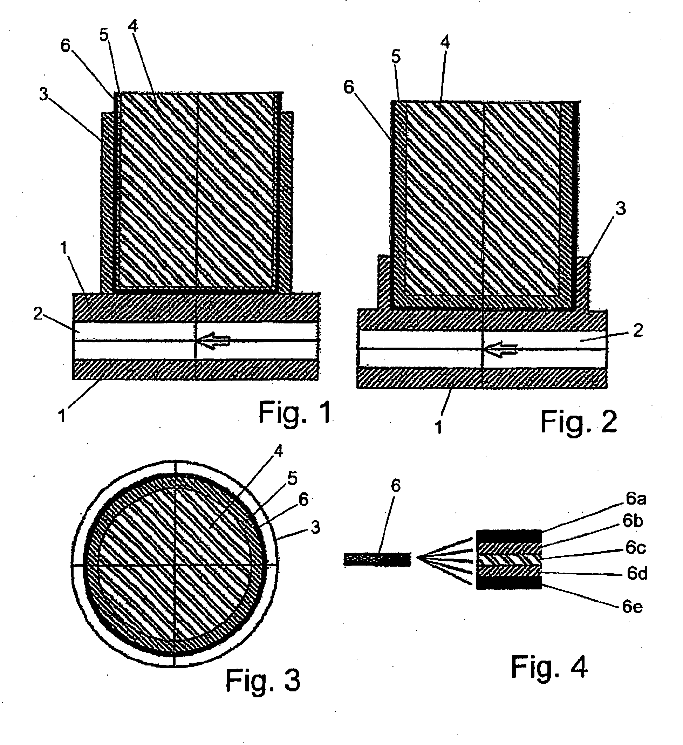

Das erste Ausführungsbeispiel nach Fig. 1 umfasst einen Kühlkörper 1, der als plattenförmiges Bauteil ausgeformt ist und sich in einer Ebene erstreckt, die waagerecht von links nach rechts zur Zeichnungsebene sowie senkrecht zur Zeichnungsebene verläuft.

Innerhalb des Kühlkörpers sind ein oder mehrere Kühlkanäle 2 vorgesehen, durch die ein Kältemittel einer Kraftfahrzeug-Klimaanlage strömt. Der Kühlkörper ist als Verdampfer ausgelegt, so dass das Kältemittel innerhalb des Kühlkörpers besonders effektiv Wärme aufnimmt.

Senkrecht zu der Kühlkörperebene ist ein hohlzylindrischer Leitkörper 3 angeordnet. Der Leitkörper 3 ist flächig mit dem Kühlkörper verlötet. Zur Vereinfachung der Herstellung können die Leitkörper vor der Verlötung in Ausnehmungen des Kühlkörpers eingesetzt sein, insbesondere mit Presssitz. Die Wandstärke des Leitkörpers 3 beträgt vorliegend zwischen etwa 0,8 mm und etwa 5 mm, wobei der Durchmesser des Leitkörpers etwa 40 mm beträgt. Hierdurch ist eine ausreichende Ableitung der über die Innenfläche des Leitkörpers aufgenommenen Wärme an den Kühlkörper 1 gewährleistet. Die Wandstärke ist insbesondere eine kritische Größe, die in Abhängigkeit von gewünschtem Gewicht und gewünschter Kühlleistung insbesondere im oberen Bereich der Leitkörper je nach Anforderungen optimiert ist.

Innerhalb des einseitig offenen Leitkörpers 3 ist eine zylinderförmige Lithium-Ionen-Batterie als elektrisches Element 4 eingesetzt. Das Element 4 hat eine relativ dünne metallische Außenwand 5 etwa der Stärke 0,1mm bis 0,8mm. Die zylindrische Umfangswandung des Elements bildet eine Seitenfläche und die dem Kühlkörper zugewandte Stirnseite bildet eine Bodenfläche des Elements. Die gesamte Vorrichtung umfasst eine Mehrzahl von Elementen 4 in Leitkörpern 5, wobei die Elemente und Leitkörper nebeneinander angeordnet sind und die Bodenflächen der Elemente im Wesentlichen in einer Ebene liegen, die sich entlang und im wesentlichen parallel zu dem Kühlkörper 1 erstreckt. Je nach Bauform können dabei auch einzelne Elemente in Richtung ihrer Zylinderachse versetzt angeordnet sein, ohne das Prinzip der Erfindung zu verlassen.

Zwischen der metallischen Wand 5 und dem Leitkörper 3 sowie dem Kühlkörper 1 ist eine Isolierschicht 6 vorgesehen, die eine elektrische Isolierung mit einer Durchbruchsfestigkeit von mehr als einem kV bewirkt. Die Isolierschicht 6 ist gemäß Fig. 4 detailliert dargestellt und besteht aus vorliegend insgesamt fünf einzelnen Schichten. Dabei bestehen die beiden äußeren Schichten 6a, 6e jeweils aus einer Pulverlackierung, die zunächst einerseits auf der Innenwandung des Kühlkörpers 3 und andererseits auf der Außenwandung 5 der Batterie 4 aufgebracht werden. Die mittlere Schicht 6c besteht aus Glimmerpapier, was einen guten Schutz gegen mechanische Beschädigungen der Schicht durch Grate o.ä. bietet. zwischen der mittleren Schicht 6c und den äußeren Schichten 6a, 6e befindet sich jeweils eine Zwischenschicht 6b, 6d aus Klebstoff. Durch Verwendung des Klebstoffs kann das Element sicher und ohne mechanische Verspannung in den Leitkörper 3 eingesetzt werden, wobei zudem eine vollständig stoffschlüssige Verbindung gegeben ist und insbesondere keine flächigen Lufteinschlüsse zwischen Element 4 und Leitkörper 3 verbleiben, durch die die Kühlleistung vermindert wird.

Fig. 2 zeigt eine Abwandlung der Ausführung aus Fig. 1. Hierbei weist das Element 4 eine erheblich dickere Wand 5 auf, mittels der zumindest im oberen Bereich des Elements ein ausreichender Wärmetransport in axialer Richtung des Elements gegeben ist. Entsprechend weist der Leitkörper 3 nur eine geringere Höhe auf, die nur über etwa ein Viertel des Elements 3 reicht. Hierdurch ist eine einfachere Herstellung der Vorrichtung gegeben, wobei als Voraussetzung jedoch eine spezielle Fertigung der Lithium-Ionen-Batterien mit entsprechend dickeren Wandungen gegeben ist. Bei Ausführungen mit geringeren Anforderungen an die Kühlleistung kann die Ausführung nach Fig. 2 aber auch bei Batterien mit dünnen Wandungen ausreichend sein.

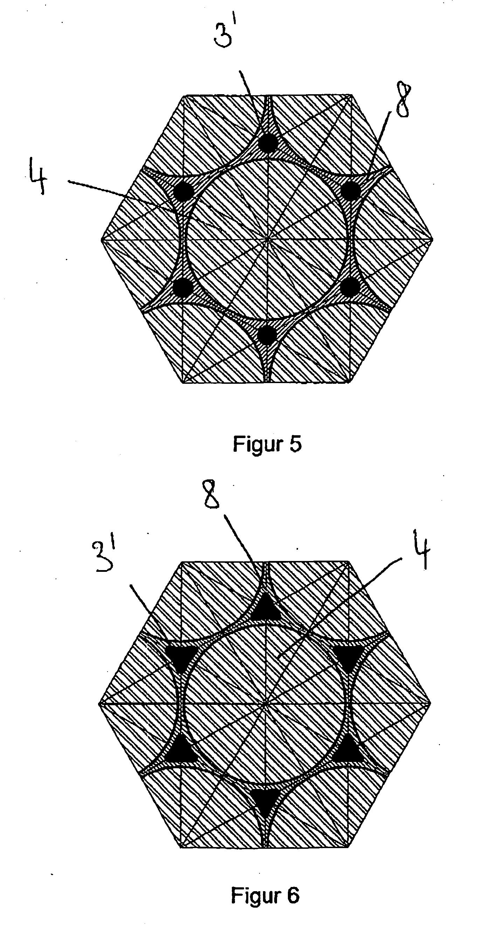

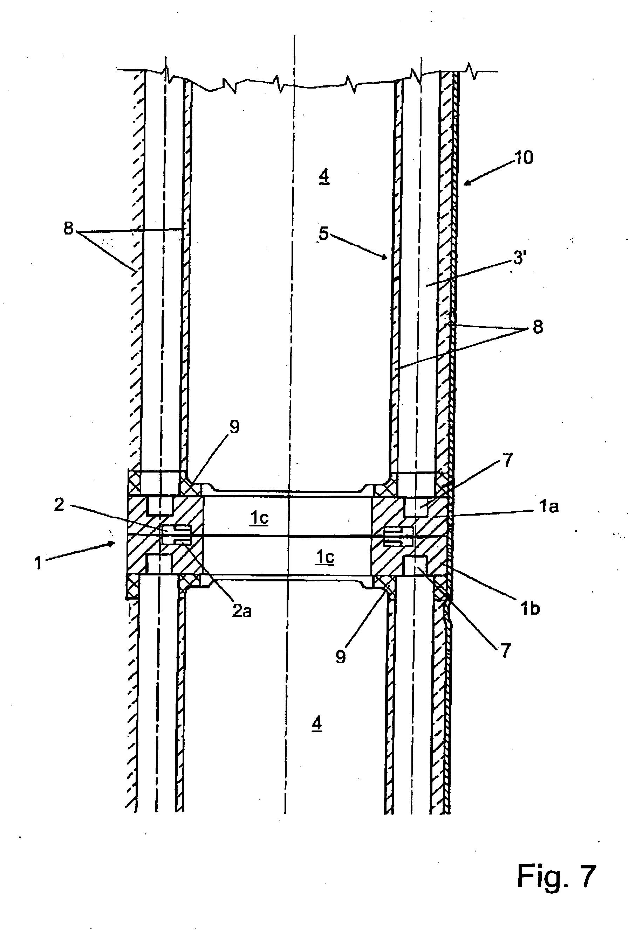

Im Falle des Ausführungsbeispiels der Fig. 7 sind die Elemente 4 nicht innerhalb von Leitkörpern 3' aufgenommen. Die Leitkörper 3' sind im Querschnitt runde Stäbe. Gemäß Fig. 5 oder Fig. 6 sind die zylindrischen Elemente 4 in dichter Packung unter Berücksichtigung notwendiger Abstände zur elektrischen Isolation angeordnet. Jeder der Leitkörperstäbe 3' ist somit von drei Elementen 4 umgeben. Die Stäbe 3' sind gemäß Fig. 7 in Ausnehmungen 7 des Kühlkörpers 1 mit Presssitz eingesetzt und verlötet, wobei Kühlkörper und Leitkörper wie im ersten Ausführungsbeispiel aus einer Aluminiumlegierung bestehen.

Zwischen den Elementen 4 und den Leitkörpern 3' verbleiben Zwischenräume, die zur elektrischen Isolation erforderlich sind. Diese Zwischenräume sind zur Halterung der Elemente 4 und insbesondere zur Gewährleistung einer ausreichenden Wärmeleitung zwischen den Seitenflächen der Elemente und den Leitkörpern 3' mit einer Vergussmasse 8 ausgefüllt. Die Vergussmasse besteht aus einem Polyurethan mit Keramikpulver als Zuschlagstoff. Zur Vermeidung von Lufteinschlüssen wird der Vergussvorgang zweckmäßig unter Unterdruck, insbesondere Vakuum vorgenommen.

Die Zwischenräume gemäß Fig. 5 beziehungsweise Fig. 6 werden vorteilhafter Weise bis zur Höhe der Leitkörper 3' oder auch darüber ausgefüllt, so dass die Leitkörper von außen nicht mehr sichtbar sind.

Eine Wand 10 in Fig. 7 ist eine äußere Gehäusewandung der Vorrichtung. Es kann sich um eine metallische, insbesondere mit der Fahrzeugmasse elektrisch verbundene Wand handeln. Die Vorrichtung kann auch nur eine Reihe von nebeneinander angeordneten Elementen 4 umfassen.

Aus der Schnittzeichnung Fig. 7 ist ersichtlich, dass die Elemente in ihrem unteren Randbereich über ringartige Abstandsstücke 9 aus Kunststoff gegenüber dem Kühlkörper 1 zugleich positioniert als auch elektrisch isoliert sind. Das Abstandsstück 9 kann als einstückige Matte mit Ausnehmungen zur positionierenden Aufnahme der Elemente ausgebildet sein.

Der plattenartige Kühlkörper 1 ist aus zwei miteinander flächig verlöteten Plattenhälften 1a, 1b zusammengesetzt. Vorliegend sind auf jeder der gegenüberliegenden Seiten des Kühlkörpers 1 Leitkörper 3' und elektrische Elemente 4 angeordnet, so dass die Vorrichtung im Wesentlichen eine SpiegelSymmetrie bezüglich der die Plattenhälften 1a, 1b trennenden Ebene aufweist. Die Plattenhälften können gefräst, gegossen oder fließgepresst oder aus mehreren Teilen hergestellt werden. Ihre Verbindung kann außer durch flächige Verlötung auch durch Verschweißung oder Verklebung erfolgen.

Die Kühlkanäle 2 sind in jeder der Plattenhälften 1 a, 1 b als zueinander ausgerichtete Ausnehmungen ausgebildet. In den Kühlkanälen sind Lamellen oder andere Ausformungen 2a vorgesehen, durch die ein besserer Wärmeaustausch mit dem Kühlmittel ermöglicht ist. Vorliegend wird ist der Kühlkörper 1 als Verdampfer einer Klimaanlage eines Kraftfahrzeugs ausgebildet, wobei die Lamellen 2a eine bessere Verteilung und Verdampfung des Kältemittels bewirken.

Unterhalb der Bodenflächen der Elemente 4 hat der Kühlkörper 1 jeweils eine Ausnehmung, die vorliegend als vollständige Durchbrechung 1 c des Kühlkörpers ausgebildet ist. Die Elemente 4 sind Batterien, deren Außenwand 5 über eine nicht dargestellte Kontaktfahne im Inneren mit der Bodenfläche kontaktiert ist. Zugleich weist der Boden eine Sollbruchstelle auf. Wird die Batterie zu heiß, so bricht oder birst der Boden und die Kontaktfahne reißt ab, was zu einer Unterbrechung des Stromkreises führt. Hierzu muss das Blech des Bodens ausreichend weit ausweichen können, wozu die Ausnehmung 1 c den entsprechenden Raum bereitstellt. Durch die Abstandsstücke 9 ist gewährleistet, dass die Ausnehmung 1c nicht beim Vergießen mit der Vergussmasse 8 verfüllt wird. Zur Verbesserung der Betriebssicherheit kann zwischen den gegenüberliegenden Böden zweier Elemente innerhalb der Durchbrechung 1 c eine Kunststofffolie oder ähnliches eingezogen sein. Hierdurch würde sich selbst in dem unwahrscheinlichen Fall, dass zwei gegenüberliegende Böden bersten, kein Kurzschluss durch sich berührende geborstene Böden zweier Elemente entstehen.

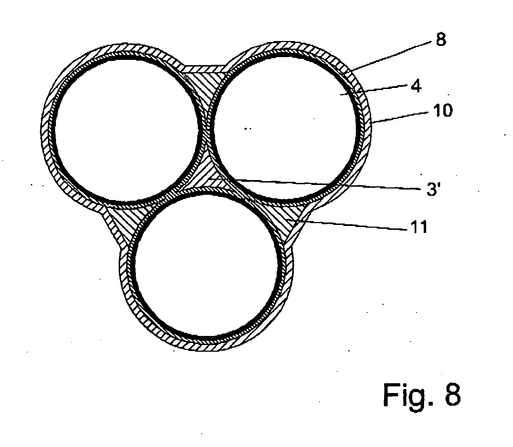

Ein weiteres Ausführungsbeispiel der Erfindung ist in Fig. 8 dargestellt. zur Vereinfachung umfasst die Darstellung nur drei elektrische Elemente 4, wobei in der Praxis regelmäßig erheblich mehr Elemente, zum Beispiel dreißig und mehr, vorgesehen sind. Zwischen den elektrischen Elementen 4 sind wie in Fig. 6 Leitkörper 3' von im wesentlichen dreieckigem Querschnitt angeordnet, die aus einer Aluminiumlegierung bestehen und mit dem ebenfalls aus Aluminium geformten Kühlkörper 1 verbunden sind. In den verbleibenden Zwischenräumen ist elektrisch isolierende Vergussmasse 8 vorgesehen. Dieser so aufgebaute Block aus elektrischen Elementen 4 und Leitkörpern 3' ist innerhalb einer geschlossenen Wandung 10 aus Aluminiumlegierung angeordnet. Einige äußere der Leitkörper 11 stehen mit einer entsprechend geformten Seitenfläche unmittelbar thermisch und elektrisch mit der Wandung 10 in Kontakt, wobei Leitkörper 3' und Wandung 10 in dem Kontaktbereich flächig verlötet sind. Zudem liegt die Wandung 10 unmittelbar an einem Außenumfang des Kühlkörpers 1 an (siehe auch Fig. 7), wobei Kühlkörper 1 und Wandung 10 ebenfalls flächig miteinander verlötet sind.

Durch die Wandung 10 ist somit ein äußeres Gehäuse für die Vorrichtung ausgebildet, das eine gute mechanische Festigkeit gegen Erschütterungen bietet. Zudem wird ein weiterer Beitrag der Kühlleistung durch die Wandung geleistet, da diese gut wärmeleitend ist und mit dem Kühlkörper 1 und den Leitkörpern 11 in thermischem Kontakt steht.

Die Wandung 10 besteht aus entsprechend geformtem Aluminiumblech, wobei sie ein oder mehrere Blechteile umfassen kann. Nicht dargestellte Kanten der Blechteile in Umfangsrichtung stoßen zweckmäßig in Überlappung mit den äußeren Leitkörpern 11 aneinander, so dass durch die flächige Verlötung an dieser Stelle zugleich eine sichere Festlegung der stoßbündigen Kanten der Wandung 10 gegeben ist.

Bei der Herstellung der Vorrichtung werden zunächst Leitkörper 3', 11, Wandung 10 und Kühlkörper 1 zueinander positioniert und mechanisch ausreichend fest gehalten. Zumindest an den jeweiligen Berührstellen weisen die Aluminiumteile eine Lotplattierung auf. Hiernach wird die so vormontierte Teilvorrichtung in einen Lötofen verbracht und insgesamt zur flächigen Verlötung der genannten Aluminiumteile erhitzt.

Nachfolgend werden die elektrischen Elemente und deren Abstandsstücke 9 eingesetzt. Hiernach wird die Vergussmasse 8 eingespritzt, wobei die Wandung 10 zugleich als Vergussrahmen fungiert. Unter Umständen wirkt die Wandung 10 auch oder stattdessen als Befestigungsrahmen.

Es versteht sich, dass die Merkmale der verschiedenen Ausführungsbeispiele der Erfindung zwanglos miteinander kombiniert werden können, So kann etwa das erste Ausführungsbeispiel auch beidseitig des Kühlkörpers Elemente aufweisen. Auch kann eine dem zweiten Ausführungsbeispiel entsprechende Ausnehmung gegenüber der Sollbruchstelle des Elementbodens vorgesehen sein.

## Patentansprüche

1. Vorrichtung zur Kühlung elektrischer Elemente insbesondere eines Kraftfahrzeugs, umfassend
einen von einem Kühlmittel durchströmbaren Kühlkörper (1),
eine Mehrzahl von elektrischen Elementen (4), die jeweils eine Bodenfläche und eine Seitenfläche aufweisen, wobei die Bodenflächen der elektrischen Elemente (4) zu dem Kühlkörper weisen, insbesondere an den Kühlkörper angrenzen, und insbesondere im Wesentlichen in einer Ebene angeordnet sind, und wobei der Kühlkörper (1) sich insbesondere in einer Ebene erstreckt, die im Wesentlichen parallel zu der Ebene der Bodenflächen der Elemente (4) ausgerichtet ist, eine Mehrzahl von Leitkörpern (3, 3'), die zur Ableitung von Wärme mit den Seitenflächen der elektrischen Elemente und mit dem Kühlkörper in thermischem Kontakt stehen,
**dadurch gekennzeichnet,**
**dass** zur Überbrückung und/oder Vermeidung von Lufteinschlüssen eine stoffschlüssige Verbindung einerseits zwischen den Leitkörpern (3, 3') und den Seitenflächen der elektrischen Elemente (4) und/oder andererseits zwischen den Leitkörpern (3, 3') und dem Kühlkörper (1) vorgesehen ist.

2. Vorrichtung nach Anspruch 1, **dadurch gekennzeichnet, dass** der Kühlkörper (1) als Plattenelement ausgebildet ist, wobei das Kühlmittel den Kühlkörper (1) in seiner Erstreckungsebene durchströmt.

3. Vorrichtung nach Anspruch 2, **dadurch gekennzeichnet, dass** der Kühlkörper (1) aus zwei Plattenhälften (1a, 1 b) zusammengesetzt ist, insbesondere mittels flächiger Verlötung oder Klebung.

4. Vorrichtung nach einem der vorhergehenden Ansprüche, **dadurch gekennzeichnet, dass** die Leitkörper (3, 3') an dem Kühlkörper (1) angeordnet sind und sich im wesentlichen senkrecht zu der Ebene des Kühlkörpers (1) erstrecken.

5. Vorrichtung nach Anspruch 4, **dadurch gekennzeichnet, dass** die Leitkörper (3) Hohlzylinder sind, in denen jeweils ein elektrisches Element (4) aufgenommen ist.

6. Vorrichtung nach Anspruch 5, **dadurch gekennzeichnet, dass** die Hohlzylinder aus Aluminium oder einer Aluminiumlegierung bestehen und eine Wandstärke von etwa 0,8 mm bis etwa 5 mm aufweisen.

7. Vorrichtung nach Anspruch 5 oder 6, **dadurch gekennzeichnet, dass** die Hohlzylinder sich nur über einen Teil einer Höhe der Seitenwände der elektrischen Elemente (4) erstrecken.

8. Vorrichtung nach einem der Ansprüche 5 bis 7, **dadurch gekennzeichnet, dass** die Hohlzylinder an ihren Außenwandungen rippenartige Fortsätze aufweisen.

9. Vorrichtung nach einem der Ansprüche 1 bis 4, **dadurch gekennzeichnet, dass** die Leitkörper (3') als Stäbe ausgebildet sind, die zwischen den Seitenflächen benachbarter elektrischer Elemente (4) angeordnet sind.

10. Vorrichtung nach Anspruch 9, **dadurch gekennzeichnet, dass** die Stäbe einen im Wesentlichen kreisförmigen Querschnitt aufweisen.

11. Vorrichtung nach Anspruch 9, **dadurch gekennzeichnet, dass** die Stäbe einen im Wesentlichen dreieckigen Querschnitt aufweisen.

12. Vorrichtung nach einem der Ansprüche 9 bis 11, **dadurch gekennzeichnet, dass** zwischen den Leitkörpern (3, 3') und den Seitenflächen der elektrischen Elemente (4) Zwischenräume verbleiben, die mittels elektrisch isolierender Vergussmasse (8) aufgefüllt sind.

13. Vorrichtung nach Anspruch 12, **dadurch gekennzeichnet, dass** die Vergussmasse (8) ein Polymer auf Polyurethanbasis ist.

14. Vorrichtung nach Anspruch 12 oder 13, **dadurch gekennzeichnet, dass** die Vergussmasse (8) mit einem Zuschlagstoff zur Erhöhung ihrer thermischen Leitfähigkeit versetzt ist.

15. Vorrichtung nach Anspruch 14, **dadurch gekennzeichnet, dass** der Zuschlagstoff elektrisch isolierend ist und insbesondere keramische Partikel umfasst.

16. Vorrichtung nach einem der vorhergehenden Ansprüche, **dadurch gekennzeichnet, dass** der Kühlkörper (1) zwei gegenüberliegende Seiten aufweist, wobei auf jeder der Seiten Leitkörper (3, 3') angeordnet sind, die sich zu der jeweiligen Seite im Wesentlichen senkrecht erstrecken.

17. Vorrichtung nach einem der vorhergehenden Ansprüche, **dadurch gekennzeichnet, dass** zwischen den elektrischen Elementen (4) und den Leitkörpern (3, 3') eine elektrisch isolierende Beschichtung (6) vorgesehen ist.

18. Vorrichtung nach Anspruch 17, **dadurch gekennzeichnet, dass** die Beschichtung (6) stoffschlüssig ist und insbesondere keine flächigen Lufteinschlüsse aufweist.

19. Vorrichtung nach Anspruch 17 oder 18, **dadurch gekennzeichnet, dass** die Beschichtung (6) eine Isolierlackschicht (6a, 6e), insbesondere eine Pulverbeschichtung umfasst.

20. Vorrichtung nach einem der Ansprüche 17 bis 19, **dadurch gekennzeichnet, dass** die Beschichtung eine Klebstoffschicht (6b, 6d) umfasst.

21. Vorrichtung nach einem der Ansprüche 17 bis 20, **dadurch gekennzeichnet, dass** die Beschichtung eine Schicht aus Glimmerpapier (6c) umfasst.

22. Vorrichtung nach einem der vorhergehenden Ansprüche, **dadurch gekennzeichnet, dass** zumindest einige der elektrischen Elemente (4) elektrochemische Akkumulatoren sind, insbesondere Lithium-Ionen-Batterien.

23. Vorrichtung nach einem der vorhergehenden Ansprüche, **dadurch gekennzeichnet, dass** zumindest einige der elektrischen Elemente Kondensatoren sind.

24. Vorrichtung nach einem der vorhergehenden Ansprüche, **dadurch gekennzeichnet, dass** die elektrischen Elemente (4) eine im Wesentlichen zylindrische Form aufweisen, wobei die Bodenfläche eine stimseitige Fläche des Zylinders ist.

25. Vorrichtung nach einem der vorhergehenden Ansprüche, **dadurch gekennzeichnet, dass** die elektrischen Elemente (4) eine metallene Außenwandung aufweisen, die auf einem elektrischen Potential des Elements (4) liegt.

26. Vorrichtung nach einem der vorhergehenden Ansprüche, **dadurch gekennzeichnet, dass** der Kühlkörper (1) eine Ausnehmung (1c) aufweist, die zumindest teilweise von der Bodenfläche eines elektrischen Elements (4) überdeckt wird, wobei das elektrische Element (4) im Bereich der Überdeckung eine Sollbruchstelle in der Bodenfläche aufweist und wobei ein aufgebrochener Boden in die Ausnehmung ausweicht.

27. Vorrichtung nach einem der vorhergehenden Ansprüche, **dadurch gekennzeichnet, dass** zwischen dem Kühlkörper (1) und einem der elektrischen Elemente (4) ein Abstandsstück (9) aus einem elektrisch isolierenden Material angeordnet ist.

28. Vorrichtung nach einem der vorhergehenden Ansprüche, **dadurch gekennzeichnet, dass** das Kühlmittel ein Kältemittel einer Klimaanlage ist.

29. Vorrichtung nach Anspruch 28, **dadurch gekennzeichnet, dass** der Kühlkörper (1) als ein Verdampfer der Klimaanlage ausgebildet ist.

30. Vorrichtung nach einem der vorhergehenden Ansprüche, **dadurch gekennzeichnet, dass** der Kühlkörper (1) gegenüber zumindest einigen der elektrischen Elemente (4) elektrisch isoliert ist, wobei die Isolation insbesondere gegenüber Spannungen von wenigstens etwa 1000 Volt durchbruchsfest ist.

31. Vorrichtung nach einem der vorhergehenden Ansprüche, **dadurch gekennzeichnet, dass** Kühlkörper (1) und/oder Leitkörper (3, 3') im Wesentlichen aus Aluminium oder einer Aluminiumlegierung bestehen.

32. Vorrichtung nach einem der vorhergehenden Ansprüche, **dadurch** gekenzeichnet, dass die Mehrzahl der Elemente von einer insbesondere aus Metall bestehenden Wandung (1) umgeben sind.

33. Vorrichtung nach Anspruch 32, **dadurch gekennzeichnet, dass** die Wandung (10) mit dem Kühlkörper (1) in thermischem Kontakt steht und insbesondere unmittelbar mit dem Kühlkörper (1) verbunden ist.

34. Vorrichtung nach Anspruch 32 oder 33, **dadurch gekennzeichnet, dass** die Wandung (1) mit zumindest einem der Leitkörper (3', 11 ) in thermischem Kontakt steht und insbesondere unmittelbar mit dem Leitkörper (3', 11) verbunden ist.

35. Vorrichtung nach einem der Ansprüche 32 bis 34, **dadurch gekennzeichnet, dass** die Wandung (10) aus zumindest einem Blechteil besteht.

36. Vorrichtung nach Anspruch 35, **dadurch gekennzeichnet, dass** zwei Kanten der Wandung (10) in einem Bereich einer Überlappung mit einem der Leitkörper (11) aneinander angrenzen.

37. Vorrichtung nach einem der Ansprüche 32 bis 36, **dadurch gekennzeichnet, dass** die Wandung mit zumindest einem aus der Gruppe Kühlkörper und einer der Leitkörper (11) verlötet ist.

38. Vorrichtung nach Anspruch 37, **dadurch gekennzeichnet, dass** die Wandung (10), die Leitkörper (3', 11) und der Kühlkörper (1) jeweils aus einer zumindest teilweise lotplattierten Aluminiumlegierung bestehen.

39. Vorrichtung nach Anspruch 38, **dadurch gekennzeichnet, dass** die Wandung (10), die Leitkörper (3', 11) und der Kühlkörper (1) im Zuge einer Herstellung der Vorrichtung als vormontierte Baugruppe insgesamt erhitzt wird, um die Teile miteinander zu verlöten.

40. Vorrichtung nach einem der vorhergehenden Ansprüche, **dadurch gekennzeichnet, dass** durch die Wandung (10) ein Vergussrahmen zum stoffschlüssigen Vergießen von Zwischenräumen zwischen den elektrischen Elementen (4) mit einer elektrisch isolierenden Vergussmasse (8) ausgebildet ist.

## Claims

1. A device for cooling electrical elements, in particular those of a motor vehicle, comprising
a heat sink (1) through which a coolant can flow,
a plurality of electrical elements (4) , each having a bottom surface and a side surface, wherein the bottom surfaces of the electrical elements (4) face the heat sink, in particular adjoin the heat sink, and, in particular, are disposed substantially in a plane, and wherein the heat sink (1) extends in a plane, in particular, which is oriented substantially parallel to the plane of the bottom surfaces of the elements (4),
a plurality of conductive elements (3, 3') which are in thermal contact with the side surfaces of the electrical elements and with the heat sink to dissipate heat, **characterized in that**, to bridge and/or prevent air inclusions, a bonded connection is provided between the conductive elements (3, 3') and the side surfaces of the electrical elements (4) and/or between the conductive elements (3, 3') and the heat sink (1).

2. The device according to claims 1, **characterized in that** the heat sink (1) is in the form of a plate element, wherein the coolant flows through the heat sink (1) in the extension plane thereof.

3. The device according to claim 2, **characterized in that** the heat sink (1) is composed of two plate halves (1a, 1b), in particular by way of flat soldering or bonding.

4. The device according to one of the preceding claims, **characterized in that** the conductive elements (3, 3') are disposed on the heat sink (1) and extend substantially perpendicularly to the plane of the heat sink (1).

5. The device according to claim 4, **characterized in that** the conductive elements (3) are hollow cylinders in each of which an electrical element (4) is accommodated.

6. The device according to claim 5, **characterized in that** the hollow cylinders are made of aluminum or an aluminum alloy and have a wall thickness of approximately 0.8 mm to approximately 5 mm.

7. The device according to claim 5 or 6, **characterized in that** the hollow cylinders extend across only a portion of a height of the side walls of the electrical elements (4).

8. The device according to one of the claims 5 to 7, **characterized in that** the hollow cylinders comprise rib-type projections on the outer walls thereof.

9. The device according to one of the claims 1 to 4, **characterized in that** the conductive elements (3') are formed as rods disposed between the side surfaces of adjacent electrical elements (4).

10. The device according to claim 9, **characterized in that** the rods have a substantially circular cross section.

11. The device according to claim 9, **characterized in that** the rods have a substantially triangular cross section.

12. The device according to one of the claims 9 to 11, **characterized in that** intermediate spaces remain between the conductive elements (3, 3') and the side surfaces of the electrical elements (4), which are filled with an electrically insulating casting compound (8).

13. The device according to claim 12, **characterized in that** the casting compount (8) is a polyurethane-based polymer.

14. The device according to claim 12 or 13, **characterized in that** the casting compound (8) includes an additive for increasing the thermal conductivity thereof.

15. The device according to claim 14, **characterized in that** the additive is electrically insulating and comprises ceramic particles in particular.

16. The device according to one of the preceding claims, **characterized in that** the heat sink (1) comprises two diametrically opposed sides, wherein conductive elements (3, 3') which extend substantially perpendicular to the particular side are disposed on each of the sides.

17. The device according to one of the preceding claims, **characterized in that** an electrically insulating coating (6) is provided between the electrical elements (4) and the conductive elements (3, 3').

18. The device according to claim 17, **characterized in that** the coating (6) is bonded and, in particular, comprises no flat air inclusions.

19. The device according to claim 17 or 18, **characterized in that** the coating (6) comprises an insulating varnish layer (6a, 6e), in particular, a powder coating.

20. The device according to one of the claims 17 to 19, **characterized in that** the coating comprises an adhesive layer (6b, 6d).

21. The device according to one of the claims 17 to 20, **characterized in that** the coating comprises a layer made of mica paper (6c).

22. The device according to one of the preceding claims, **characterized in that** at least some of the electrical elements (4) are electrochemical accumulators, in particular lithium ion batteries.

23. The device according to one of the preceding claims, **characterized in that** at least some of the electrical elements are capacitors.

24. The device according to one of the preceding claims, **characterized in that** the electrical elements (4) have a substantially cylindrical shape, wherein the bottom surface is an end-face surface of the cylinder.

25. The device according to one of the preceding claims, **characterized in that** the electrical elements (4) comprise a metallic outer wall which is at an electrical potential of the element (4).

26. The device according to one of the preceding claims, **characterized in that** the heat sink (1) has a recess (1c) which is covered, at least in part, by the bottom surface of an electrical element (4), wherein the electrical element (4) has a predetermined breaking point in the bottom surface in the region of the overlap, and wherein a broken-open base moves into the recess.

27. The device according to one of the preceding claims, **characterized in that** a spacer (9) made of an electrically insulating material is disposed between the heat sink (1) and one of the electrical elements (4).

28. The device according to one of the preceding claims, **characterized in that** the coolant is a refrigerant of an air conditioning system.

29. The device according to claim 28, **characterized in that** the heat sink (1) is in the form of an evaporator of the air conditioning system.

30. The device according to one of the preceding claims, **characterized in that** the heat sink (1) is electrically insulated at least with respect to some of the electrical elements (4), wherein the insulation is capable of withstanding a breakdown with respect to voltages of at least approximately 1000 volts.

31. The device according to one of the preceding claims, **characterized in that** heat sinks (1) and/or conductive elements (3, 3') are composed substantially of aluminum or an aluminum alloy.

32. The device according to one of the preceding claims, **characterized in that** the plurality of elements are enclosed by a wall (1) made of metal in particular.

33. The device according to claim 32, **characterized in that** the wall (10) is in thermal contact with the heat sink (1) and, in particular, is connected directly to the heat sink (1).

34. The device according to claim 32 or 33, **characterized in that** the wall (1) is in thermal contact with at least one of the conductive elements (3', 11) and, in particular, is connected directly to the conductive element (3', 11).

35. The device according to one of the claims 32 to 34, **characterized in that** the wall (10) is made of at least one sheet-metal element.

36. The device according to claim 35, **characterized in that** two edges of a wall (10) adjoin one another in a region of an overlap with one of the conductive elements (11).

37. The device according to one of the claims 32 to 36, **characterized in that** the wall is soldered with at least one from the group of heat sinks and one of the conductive elements (11).

38. The device according to claim 37, **characterized in that** the wall (10), the conductive elements (3', 11) and the heat sink (1) are each made of an at least partially solder-plated aluminum alloy.

39. The device according to claim 38, **characterized in that**, during manufacture of the device, the wall (10), the conductive elements (3', 11) and the heat sink (1) are all heated as a preassembled assembly in order to solder the parts to one another.

40. The device according to one of the preceding claims, **characterized in that** a casting frame for the bonded casting of intermediate spaces between the electrical elements (4) with an electrically insulating casting compound (8) is formed by the wall (10).

## Revendications

1. Dispositif servant au refroidissement d'éléments électriques, en particulier d'un véhicule automobile, comprenant :
- une refroidisseur (1) pouvant être traversé par un liquide de refroidissement,
- une pluralité d'éléments électriques (4) qui présentent à chaque fois une surface de fond et une surface latérale, où les surfaces de fond des éléments électriques (4) pointent vers le refroidisseur, en particulier sont contiguës au refroidisseur et, en particulier, sont disposées pratiquement dans un plan, et où le refroidisseur (1) s'étend en particulier dans un plan qui est orienté pratiquement de façon parallèle au plan des surfaces de fond des éléments (4),
- une pluralité de corps conducteurs (3, 3') qui, pour la dissipation de chaleur, sont en contact thermique avec les surfaces latérales des éléments électriques et avec le refroidisseur,
**caractérisé en ce qu'**il est prévu, pour ponter et / ou éviter des poches d'air, un assemblage par continuité de matière, d'une part entre les corps conducteurs (3, 3') et les surfaces latérales des éléments électriques (4) et / ou, d'autre part, entre les corps conducteurs (3, 3') et le refroidisseur (1).

2. Dispositif selon la revendication 1, **caractérisé en ce que** le refroidisseur (1) est configuré comme un élément à plaques, où le liquide de refroidissement traverse le refroidisseur (1) dans son plan d'extension.

3. Dispositif selon la revendications 2, **caractérisé en ce que** le refroidisseur (1) est composé de deux moitiés de plaque (1a, 1b), assemblées en particulier par brasage ou par collage effectué sur toute la surface.

4. Dispositif selon l'une quelconque des revendications précédentes, **caractérisé en ce que** les corps conducteurs (3, 3') sont disposés sur le refroidisseur (1) et s'étendent pratiquement de façon perpendiculaire au plan du refroidisseur (1).

5. Dispositif selon la revendication 4, **caractérisé en ce que** les corps conducteurs (3) sont des cylindres creux dans desquels est logé à chaque fois un élément électrique (4).

6. Dispositif selon la revendication 5, **caractérisé en ce que** les cylindres creux sont en aluminium ou composés d'un alliage d'aluminium et présentent une épaisseur de paroi comprise à peu près entre 0,8 mm et à peu près 5 mm.

7. Dispositif selon la revendication 5 ou 6, **caractérisé en ce que** les cylindres creux s'étendent seulement sur une partie d'une hauteur des parois latérales des éléments électriques (4).

8. Dispositif selon l'une quelconque des revendications 5 à 7, **caractérisé en ce que** les cylindres creux présentent, sur leurs parois extérieures, des prolongements en forme d'ailettes.

9. Dispositif selon l'une quelconque des revendication 1 à 4, **caractérisé en ce que** les corps conducteurs (3') sont configurés comme des barres qui sont disposées entre les surfaces latérales d'éléments électriques adjacents (4).

10. Dispositif selon la revendication 9, **caractérisé en ce que** les barres présentent une section pratiquement de forme circulaire.

11. Dispositif selon la revendication 9, **caractérisé en ce que** les barres présentent une section pratiquement triangulaire.

12. Dispositif selon l'une quelconque des revendications 9 à 11, **caractérisé en ce que** des espaces intermédiaires subsistent entre les corps conducteurs (3, 3') et les surfaces latérales des éléments électriques (4), espaces intermédiaires qui sont comblés par un mastic de remplissage électroisolant (8).

13. Dispositif selon la revendication 12, **caractérisé en ce que** le mastic de remplissage (8) est un polymère à base de polyuréthane.

14. Dispositif selon la revendications 12 au 13, **caractérisé en ce que** le mastic de remplissage (8) est mélangé avec une matière de charge, pour que sa conductivité thermique soit augmentée.

15. Dispositif selon la revendication 14, **caractérisé en ce que** la matière de charge est électroisolante et comprend, en particulier, des particules céramiques.

16. Dispositif selon l'une quelconque des revendications précédentes, **caractérisé en ce que** le refroidisseur (1) présente deux côtés se faisant face, où sont disposés, sur chacun des côtés, des corps conducteurs (3, 3') qui s'étendent pratiquement de façon perpendiculaire au côté respectif.

17. Dispositif selon l'une quelconque des revendications précédentes, **caractérisé en ce qu'**il est prévu un revêtement électroisolant (6), entre les éléments électriques (4) et les corps conducteurs (3, 3').

18. Dispositif selon la revendication 17, **caractérisé en ce que** le revêtement (6) est appliqué par continuité de matière et ne présente, en particulier, aucune poche d'air formée en surface.

19. Dispositif selon la revendication 17 ou 18, **caractérisé en ce que** le revêtement (6) comprend une couche isolante de vernis (6a, 6e), en particulier un revêtement de poudre.

20. Dispositif selon l'une quelconque des revendications 17 à 19, **caractérisé en ce que** le revêtement comporte une couche de colle (6b, 6d).

21. Dispositif selon l'une quelconque des revendications 17 à 20, **caractérisé en ce que** le revêtement comprend une couche de papier micacé (6c).

22. Dispositif selon l'une quelconque des revendications précédentes, **caractérisé en ce qu'**au moins certains des éléments électriques (4) sont des accumulateurs électrochimiques, en particulier des batteries à lithium-ion.

23. Dispositif selon l'une quelconque des revendications précédentes, **caractérisé en ce qu'**au moins certains des éléments électriques sont des condensateurs.

24. Dispositif selon l'une quelconque des revendications précédentes, **caractérisé en ce que** les éléments électrique (4) présentent une forme pratiquement cylindrique, ou la surface de fond est une surface frontale du cylindre.

25. Dispositif selon l'une quelconque des revendications précédentes, **caractérisé en ce que** les éléments électriques (4) présentent une paroi extérieure métallique qui se trouve sur un potentiel électrique de l'élément (4).

26. Dispositif selon ligne quelconque des revendications précédentes, **caractérisé en ce que** le refroidisseur (1) présente un évidement (1c) qui est recouvert au moins partiellement par la surface de fond d'un élément électrique (4) , ou l'élément électrique (4) présente, dans la zone du recouvrement, un point destiné à la rupture et placé dans la surface de fond, et où un fond ouvert dévie dans l'évidement.

27. Dispositif selon l'une quelconque des revendications précédentes, **caractérisé en ce qu'**une pièce d'écartement (9) se composant d'un matériau électroisolant est disposée entre le refroidisseur (1) et l'un des éléments électriques (4).

28. Dispositif selon l'une quelconque des revendications précédentes, **caractérisé en ce que** le liquide de refroidissement est un fluide frigorigène d'un système de climatisation.

29. Dispositif selon la revendication 28, **caractérisé en ce que** le refroidisseur (1) est configuré comme un évaporateur du système de climatisation.

30. Dispositif selon l'une quelconque des revendications précédentes, **caractérisé en ce que** le refroidisseur (1) est isolé électriquement au moins par rapport à certains des éléments électriques (4), où l'isolant résiste aux claquages, en particulier par rapport à des tensions d'au moins 1000 volts environ.

31. Dispositif selon l'une quelconque des revendications précédentes, **caractérisé en ce que** le refroidisseur (1) et / ou les corps conducteurs (3, 3') sont essentiellement en aluminium ou se composent d'un alliage d'aluminium.

32. Dispositif selon l'une quelconque des revendications précédentes, **caractérisé en ce que** la pluralité des éléments est entourée par une paroi (10) se composant en particulier de métal.

33. Dispositif selon la revendication 32, **caractérisé en ce que** la paroi (10) est en contact thermique avec le refroidisseur (1) et est reliée en particulier directement au refroidisseur (1).

34. Dispositif selon la revendication 32 ou 33, **caractérisé en ce que** la paroi (10) est en contact thermique avec au moins l'un des corps conducteurs (3', 11) et est reliée en particulier directement au corps conducteur (3', 11).

35. Dispositif selon l'une quelconque des revendication 32 à 34, **caractérisé en ce que** la paroi (10) se compose d'au moins une pièce en tôle.

36. Dispositif selon la revendications 35, **caractérisé en ce que** deux bords de la paroi (10) sont contigus l'un à l'autre dans une zone d'un chevauchement formé par l'un des corps conducteurs (11).

37. Dispositif selon l'une quelconque des revendications 32 à 36, **caractérisé en ce que** la paroi est brasée avec au moins l'un des éléments du groupe formé par le refroidisseur et l'un des corps conducteurs (11).

38. Dispositif selon la revendication 37, **caractérisé en ce que** la paroi (10), les corps conducteurs (3', 11) et le refroidisseur (1) se composent respectivement d'un alliage d'aluminium au moins partiellement plaqué par brasage.

39. Dispositif selon la revendication 38, **caractérisé en ce que** la paroi (10), les corps conducteurs (3', 11) et le refroidisseur (1) sont, au cours de la fabrication du dispositif, chauffés tous ensemble, comme groupe unitaire préassemblé, pour braser les pièces les unes aux autres.

40. Dispositif selon l'une quelconque des revendications précédentes, **caractérisé en ce qu'**un cadre de scellement formé par la paroi (10) est configuré pour le scellement par continuité de matière, avec un mastic de remplissage électroisolant (8), d'espaces intermédiaire compris entre les éléments électriques (4).
